# DEMANDE DE BREVET EUROPEEN

(11) **EP 3 506 128 A1**
(43) Date de publication de la demande: **03.07.2019**
(21) Numéro de dépôt: 17211208.8
(22) Date de dépôt: 29.12.2017
(51) Int. Cl.: G06F 17/30, H04N 5/76, H04N 5/77

(54) **SYSTEME DE TRAITEMENT DE SEQUENCES D'IMAGES CONCERNANT UN PROCESSUS**

(71) Demandeur: Telle, Olivier, 91550 Paray Vieille Poste (FR); Telle, Benoit, 13005 Marseille (FR); Lecailtel, Franck, 91000 Evry (FR)
(72) Inventeur: TELLE, Olivier, 91550 PARAY VIEILLE POSTE (FR)
(74) Mandataire: Gauchet, Fabien Roland

(57) **Abrégé**

Ce système concerne un processus se déroulant dans un espace d'évolution (1) et dont l'exécution peut être considérée sur un temps révolu, en cours ou à venir. Il comporte au moins un dispositif de prises de vue (20) pour saisir des séquences, un dispositif de visualisation (25) pour restituer au moins certaines images desdites séquences, un organe de gestion (30) pour gérer différentes fonctions du système. Il comporte, en outre, un circuit de mémoire (31) couplé audit dispositif de prises de vues pour mémoriser des images desdites séquences issues du dispositif de prises de vues, un dispositif de déclenchement (35) muni d'une commande d'activation pour fournir des signaux de marquage, par l'intermédiaire de l'organe de gestion,(30) au dispositif de visualisation (25) en vue de restituer des images de séquences mémorisées dans le circuit de mémoire (31) pour une durée prédéterminée avant l'activation.

## Description

L'invention concerne un système de traitement de séquences d'images concernant un processus se déroulant dans un espace d'évolution et dont l'exécution peut être considérée sur un temps révolu, en cours ou à venir, système comportant au moins un dispositif de prises de vue pour saisir des séquences, un dispositif de visualisation pour restituer au moins certaines images desdites séquences, un organe de gestion pour gérer différentes fonctions du système

Ce dispositif trouve de nombreux domaines d'applications concernant la mise en évidence instantanée de comportements individuels ou collectifs se produisant dans le sport, le théâtre, etc. Il est possible ainsi d'analyser et de corriger les prestations mises en jeu dans ces activités. D'autres applications envisagées se rapportent à la science où des phénomènes dynamiques nécessitent une visualisation de leur évolution.

Un genre d'un tel système est mentionné sur le site https://www.kinovea.org.

Cependant on estime que ses possibilités sont limitées.

Le but de l'invention est de proposer un système du genre mentionné dans le préambule qui apporte des fonctionnalités importantes dans le domaine de l'évolution de processus évolutifs notamment dans le domaine du sport d'équipe et surtout une grande souplesse dans la saisie des images créées lors du déroulement des processus.

Pour cela, un tel système est remarquable en ce qu'il comporte, en outre, un circuit de mémoire couplé audit dispositif de prises de vues pour mémoriser des images desdites séquences issues du dispositif de prises de vues, un dispositif de déclenchement muni d'une commande d'activation pour fournir des signaux de marquage, par l'intermédiaire de l'organe de gestion, au dispositif de visualisation en vue de restituer des images de séquences mémorisées dans le circuit de mémoire pour une durée prédéterminée avant l'activation.

Selon une caractéristique de l'invention, un tel système est remarquable en ce que en ce qu'il comporte une pluralité de dispositifs de prises de vues et d'un organe de sélection pour définir au moins un des dispositifs de visualisation en vue de son activation.

Ainsi par cette mesure préconisée par l'invention, il est possible de suivre l'évolution de processus selon différents angles de prises de vue.

Il est prévu, selon l'invention, un système de traitement de séquences d'images concernant un processus se déroulant dans un espace d'évolution et dont l'exécution peut être considérée sur un temps révolu, en cours ou à venir, le système comportant au moins un dispositif de prises de vue pour saisir des séquences, un dispositif de visualisation pour restituer au moins certaines images desdites séquences, un organe de gestion pour gérer différentes fonctions du système, un circuit de mémoire couplé audit dispositif de prises de vues pour mémoriser des images desdites séquences issues du dispositif de prises de vues, un dispositif de déclenchement muni d'une commande d'activation pour fournir des signaux de marquage, par l'intermédiaire de l'organe de gestion, au dispositif de visualisation en vue de restituer des images de séquences mémorisées dans le circuit de mémoire pour une durée prédéterminée avant l'activation.

Avantageusement, mais facultativement, le système de traitement de séquences d'images concernant un processus, selon l'invention, présente au moins l'une des caractéristiques techniques additionnelles suivantes :
- le circuit de mémoire est une mémoire tampon de type circulaire ;
- le système de traitement de séquences d'images concernant un processus comporte une pluralité de dispositifs de prises de vues et d'un organe de sélection pour définir au moins un des dispositifs de visualisation en vue de l'activation ;
- le dispositif de déclenchement est constitué à partir d'un téléphone portable (smartphone) présentant des boutons pour définir et déclencher les signaux de marquages ;
- le dispositif de déclenchement est constitué à partir d'un dispositif sonore (sifflet ultrason) ;
- les séquences provenant d'au moins deux dispositifs de prises de vue soient vues en surimpression ;
- au moins un desdits dispositifs de visualisation est formé à partir d'un écran tactile à partir duquel il est possible d'effectuer des commandes vers l'organe de gestion ;
- les dispositifs de prises de vue étant placés en des endroits différents, il est prévu un moyen d'écriture sur l'écran tactile d'un dispositif de visualisation comportant un tel écran tactile pour décrire une trajectoire, des moyens de correction pour adapter ladite trajectoire sur un dispositif de visualisation pour une prise de vue différente ;
- le système de traitement de séquences d'images concernant un processus comportant au moins un deuxième dispositif de visualisation, l'organe de gestion comporte une unité de calcul pour reporter sur un premier dispositif de visualisation un itinéraire tracé sur le deuxième ;
- on définit un trajet préalablement pour certains aspects du processus et en ce qu'il est prévu un circuit de calcul pour déterminer l'écart entre le trajet défini préalablement sur l'écran et le trajet effectué lors du processus. ;
- les dispositifs de visualisation sont de natures différentes telles que la vitesse de prises de vue, champ de prises de vue, nature du rayonnement (infra rouge) etc ;
- au moins un dispositif de visualisation sous la commande de l'organe de gestion visualise des séquences du processus pendant le déroulement de celui-ci ;
- le système de traitement de séquences d'images concernant un processus comporte un enregistreur de commentaires effectué pendant le déroulement de la séquence enregistrée ;
- l'organe de gestion permet de gérer différentes fonctions F1 à Fn telles que superposition de scènes reconnaissance de trajectoires, marquages vidéo multiple, dispositif de visualisation pour une diffusion avec latence, analyse trajectoire ou système en mode multiple ;
- il est prévu un dispositif de télécommande pour commander l'exécution des différentes fonctions dudit système ;
- au moins un dispositif de visualisation est placé au niveau de l'espace d'évolution ;
- au moins un dispositif de projection est prévu pour fournir des images sur au moins une partie de l'espace d'évolution ;
- il est prévu une pluralité de dispositifs de déclenchement fournissant des signaux de marquage auxquels est associée une étiquette d'identification du dispositif de déclenchement ; et,
- au moins un dispositif de déclenchement est combiné avec un dispositif de visualisation de type tactile.

La description suivante accompagnée des dessins ci-annexés, le tout donné à titre d'exemple non limitatif, fera bien comprendre comment l'invention peut être réalisée. Dans les dessins :
- la figure 1 montre un schéma d'un premier système conforme à l'invention,
- les figures 2a, 2b et 2c sont des diagrammes temps explicitant le fonctionnement du système de l'invention,
- la figure 3 montre la face avant d'un dispositif de déclenchement constitué à partir d'un smart phone avec ses boutons de commandes.,
- la figure 4 montre un schéma d'un deuxième dispositif de déclenchement pour un système conforme à l'invention,
- la figure 5 montre un autre exemple de réalisation d'un dispositif de déclenchement,
- la figure 6 montre un système conforme à l'invention impliquant une pluralité de dispositifs de prises de vues,
- les figures 7a et 7b montrent la visualisation de trajectoires préétablies pour différent angles de prises de vues,
- la figure 8 montre la superposition de deux images,
- la figure 9 montre des évolutions possibles de la superposition de deux images,
- la figure 10 montre une variante de réalisation d'un système conforme à l'invention,
- la figure 11 montre d'autres variantes de réalisation d'un système conforme à l'invention.
- les figures 12 et 13 montrent un aspect du fonctionnement d'un système conforme à l'invention ayant des fonctions de mixage vidéo.

Sur ces figures, les éléments communs portent tous les mêmes références sur toutes les figures.

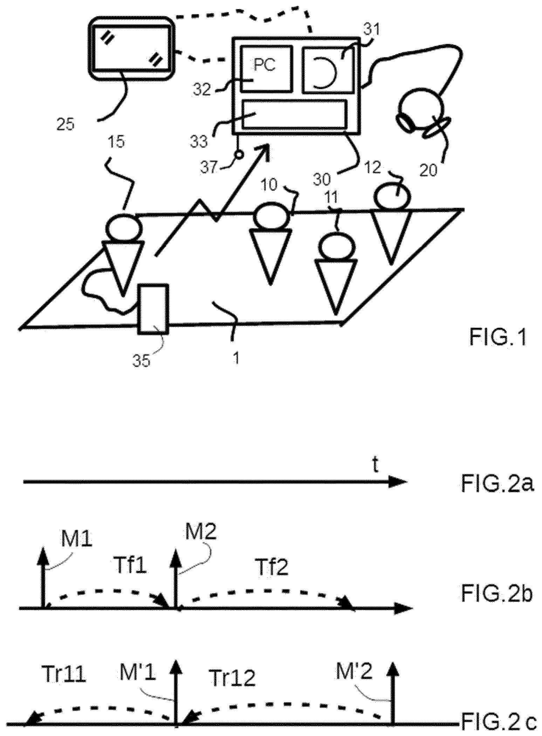

A la figure 1, le système de l'invention est destiné à suivre et à analyser le déroulement d'un match sportif tel qu'un match de basket sur un espace d'évolution 1 Les joueurs sont représentés par des silhouettes 10, 11, 12 ..... Au voisinage ou même dans l'espace d'évolution 1, l'entraîneur 15 évolue afin de surveiller et d'observer les joueurs. Un dispositif de prise de vue 20 est dirigé sur l'espace d'évolution 1 afin d'enregistrer les prestations des joueurs. Un dispositif de visualisation 25 permet de restituer les images enregistrées par le dispositif de prises de vues 20. Les prises de vues sont déclenchées par l'intermédiaire d'un organe de gestion 30 qui gère aussi différentes fonctionnalités du système de l'invention.

Selon un aspect de l'invention, il est prévu un circuit de mémoire 31 de type circulaire inséré, de préférence, dans l'organe de gestion 30 pour enregistrer et disposer en permanence des images issues du dispositif de prises de vue 20. Cet organe de gestion est réalisé à partir d'un ordinateur de type PC 32 fonctionnant sous la dépendance d'un programme enregistré dans une mémoire programme 33. Cet organe assure différentes fonctions, notamment, il peut comporter un enregistreur de commentaires effectués pendant le déroulement de la séquence enregistrée.

Un dispositif de déclenchement 35 est affecté à l'entraîneur 15. Par ce dispositif de déclenchement 35, il peut insérer une balise (une marque) dans le flux d'images fournies par le dispositif de prises de vues 20 de la manière explicitée à l'aide des figures 2a à 2c. Le dispositif de déclenchement 35 peut être ainsi réalisé à partir d'un sifflet de type à ultrasons coopérant avec un microphone 37 couplé à l'organe de gestion 30.

Sur la figure 2a, on a représenté en fonction du temps « t » le flux d'images enregistrées.

Par un appui sur un bouton ou une zone du dispositif de déclenchement 35, une marque est créée dans ce flux continu représenté à la figure 2a Aux figures 2b et 2c, on a représenté les marques ainsi créées par M1, M2, M'1, M'2,. La figure 2b est relative aux enregistrements directs pour des temps Tf1, Tf2,...tandis que sur la figure 2c, selon un aspect de l'invention, un appui sur une touche ou une zone du dispositif de déclenchement 35 permet de faire un retour en arrière sur le flux d'images sur des temps fixés par l'apparition des marques M'1, M'2 etc. pour un temps Tr11, Tr12 etc. Il est ainsi possible d'analyser des actes exécutés récemment des joueurs d'une manière quasi instantanée,

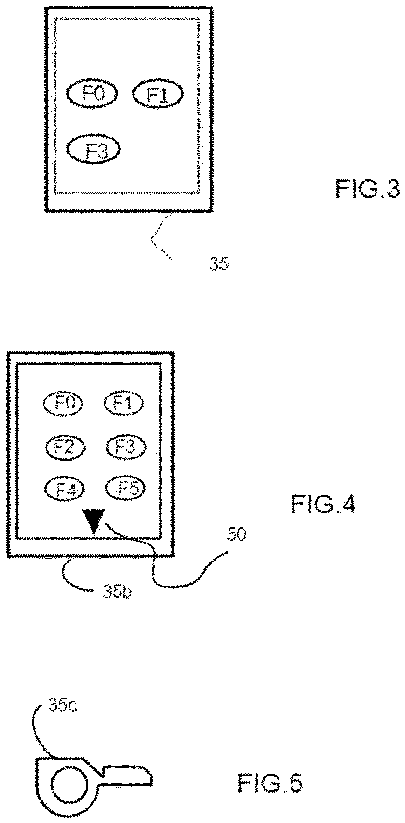

La figure 3 montre schématiquement la console de commande du dispositif de déclenchement 35. Celle-ci est installée sur un smartphone, ou tout autre appareil de type tablette coopérant avec l'application emmagasinée dans la mémoire programme 33. On a représenté trois boutons ou zone du dispositif de déclenchement 35 : un bouton F1 qui déclenche l'apparition ou la création du marqueur et un bouton F0 pour fixer la valeur des temps Tr11 Tr12 et Tf1, Tf2 etc. Ces marqueurs ainsi créés sont transmis, par voie radio par exemple, vers le l'organe de gestion 30 sous la forme de codes. Une touche F3 permet la commande de visualisation de la séquence à analyser.

L'invention propose aussi d'autres fonctionnalités qui peuvent être déclenchées au moyen des boutons ou zones visualisés sur la console du dispositif de déclenchement 35b montré à la figure 4. Cette figure 4 montre une pluralité de boutons ou zones F0,..,Fn, chacun affecté à une fonctionnalité principale. La flèche 50 explicite que d'autres fonctions peuvent être visualisées lorsqu'on appuie sur cette flèche 50.

Une autre variante de réalisation d'un dispositif de déclenchement 35c est montrée à la figure 5. Ce dispositif se présente sous la forme d'un sifflet à ultra son émettant des sons inaudibles aux participants de sorte à ne pas les gêner. Le sifflement est capté par un microphone 37 rattaché à l'organe de gestion 30.

Ainsi, nous avons, d'abord, les boutons ou zones déjà mentionnés :
- F0 fixation des durées d'enregistrement et par un appui plus long l'enregistrement Tf ou Tr ;
- F1 déclenchement marqueur ;
- F2 déclenche l'enregistrement pour une durée Tf ou Tr ;
- F3 visualisation des séquences enregistrées.

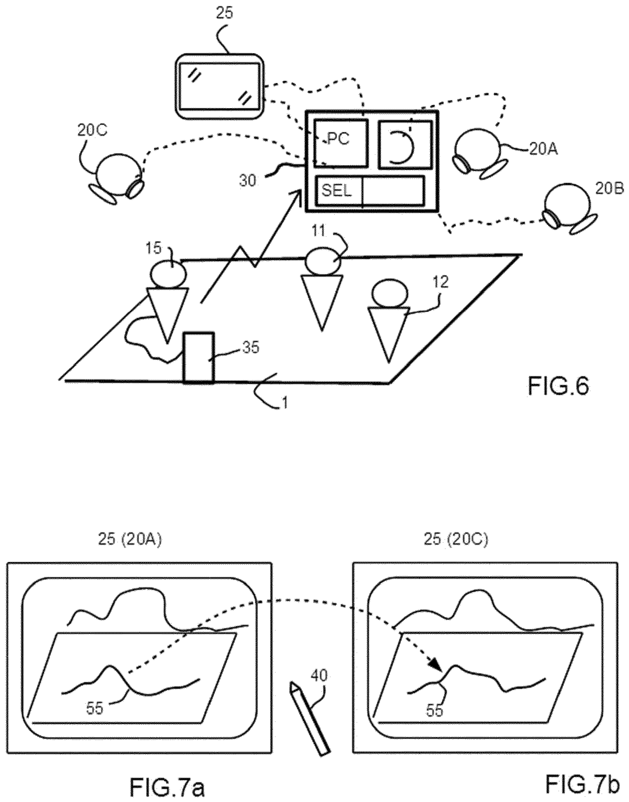

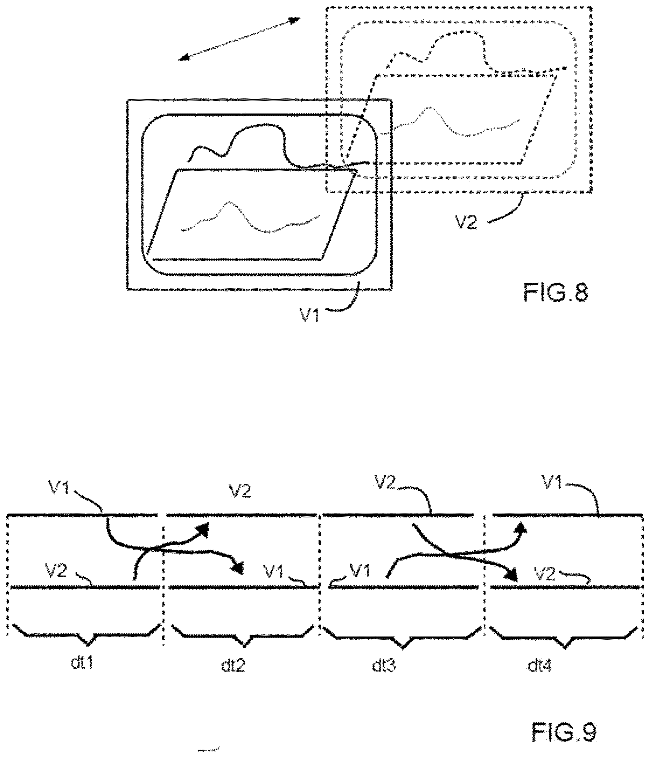

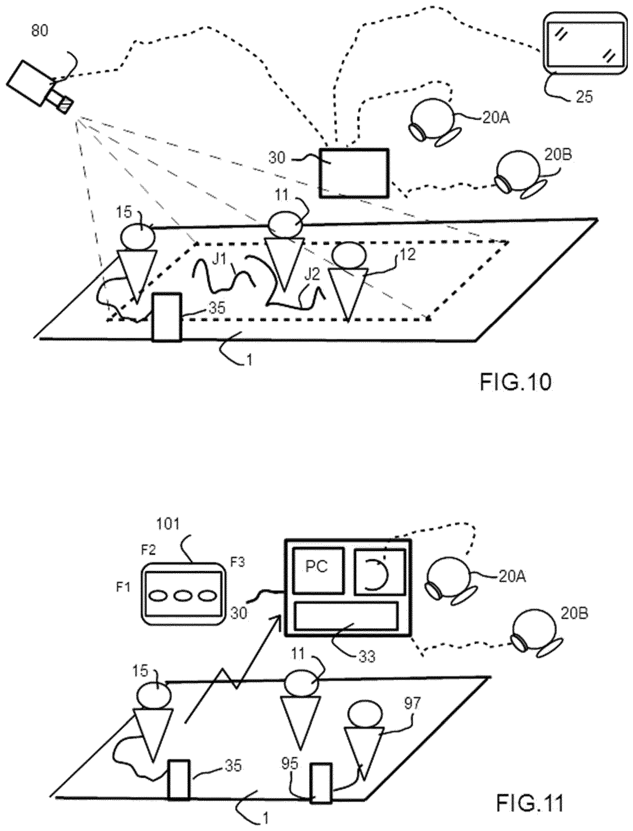

D'autres touches s ou zones ont prévues pour l'exécution de nouvelles fonctionnalités du système de l'invention :
- F4 s'applique de préférence, dans le cas où le système de l'invention comporte une pluralité de dispositifs de prises de vues 20A, 20B, 20C, comme cela est montré à la figure 6. Cette touche agit sur un organe de sélection dont le fonctionnement est défini à partir de lignes de programme SEL contenues dans la mémoire programme 33. Ainsi, il devient possible de sélectionner un ou plusieurs dispositifs de prises de vues pour un traitement vidéo.
- F5 est relative à la superposition de scènes (mixage). Cette fonctionnalité ne peut être mise en oeuvre que lorsque le dispositif de visualisation est du type tactile. La figure 7a montre l'espace de visualisation du dispositif de prises de vues 20A avant un séance d'entraînement. L'entraîneur définit à l'aide d'un stylet d'écriture 40 une trajectoire 55, montré à cette figure 7a, sur cet écran alors que c'est, par exemple, le dispositif de de prises de vues 20C qui sera considéré pour visualiser cette trajectoire ainsi définie par le stylet 40 comme cela est montré à la figure 7b. Du fait que l'angle de prise de vues du dispositif 20C est différent de celui du dispositif 20A. Une correction de type géométrique sera apportée à cette dernière. Ceci est effectué par une unité de calcul insérée dans l'organe de gestion 30. Cette correction peut être visualisée sur un autre dispositif de visualisation. Il est possible de superposer les trajectoires directement comme cela est représenté à la figure 8. Sur cette figure, on a représenté deux vues V1 et V2. La vue V1 peut se superposer avec une certaine transparence sur la vue V2. Il est possible en outre de faire évoluer, en fonction du temps, ces transparences comme cela est montré à la figure 9. Cette figure 9 montre à la ligne a, les vues présentant une certaine transparence et venant couvrir des vues ayant aucune transparence. Ainsi pendant le temps dt1 la vue V1 sera vue avec une certaine transparence laissant percevoir la vue V2 sans transparence. Pendant le temps dt2 qui suit les rôles vont être inversés. V2 présente une transparence qui laisse voir la vue V1. Pendant le temps dt3 la situation reste identique et pendant le temps dt4 on retourne à la situation de la période dt1. Il va de soi qu'il est possible de faire varier la transparence des vues.
- F6 a trait à la reconnaissance et à l'analyse de trajectoires ;
- F7 reconnaissance et analyse de groupes de trajectoires afin de définir une stratégie de jeu) ;
- F8 mesure des écarts de trajectoires entre les trajectoires prévues et celles qui ont été en fait accomplies ;
- F9 mesure des écarts de jeux théoriques/observés ;
- F10 marquages vidéo multi caméras manuel ou automatique ;
- F11.diffusion avec latence (c'est à dire en différé) ;
- F12 analyse trajectoire ou système en mode multi-vues ;
- F13 retransmission en réalité augmentée (affichage d'informations sur le terrain à l'échelle 1:1). Ceci est montré d'une manière plus explicite à la figure 10. Un dispositif de projection (télé vidéo projecteur) 80 projette sur l'espace d'évolution différentes informations, par exemple des trajectoires de jeux J1, J2 ... que les joueurs doivent essayer de suivre ;
- F14 enregistrement des séquences d'exploitation des données ;
- F15 retransmission instantanée avec usage de l'interactivité de support de diffusion (visualisation) ;
- F16 exploitation des marques provenant de différents dispositifs de marquage, comme cela est représenté à la figure 11. Sur cette figure on a représenté deux entraîneurs 15 et 95 à chacun desquels on a affecté respectivement les dispositifs de déclenchement 35 et 97. Il est possible d'utiliser un dispositif de visualisation de marquage 101 formé d'un écran tactile pour fournir des signaux de marquage. Tous ces dispositifs 35, 95 et 101 fournissent des signaux de marquage aux quels est associée une étiquette définissant leur identification pour un traitement.

Il est à noter que si l'on utilise une pluralité de dispositif de déclenchement de type sifflet à ultrasons la fréquence qu'ils émettent peut servir d'étiquette pour leur identification.

La présente invention propose des moyens de mixage tels que ceux utilisés par les animateurs. Ces moyens de mixage sont constitués à partir de lignes de programme insérés dans la mémoire de programme 33.

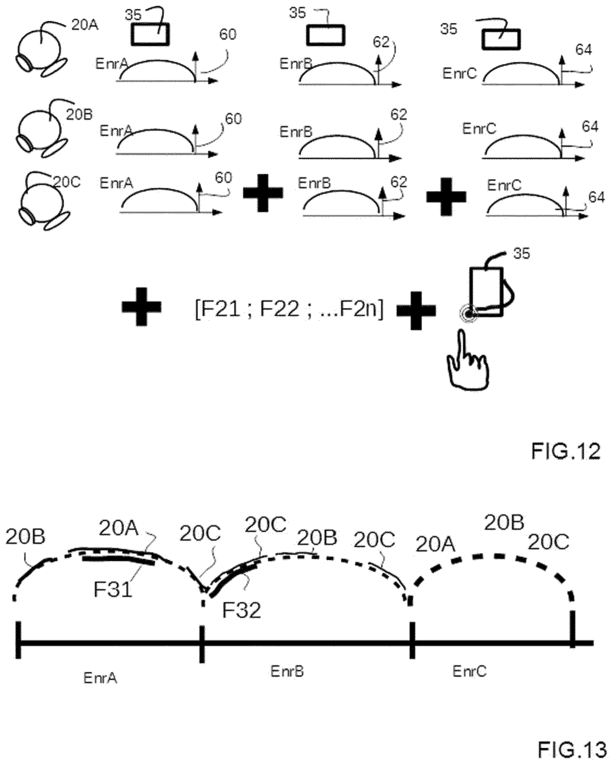

La figure 12 explique le principe de mixage mis en oeuvre par des moyens insérés dans l'organe de gestion 30 et familier aux « vidéo jockeys. »

Au moyen du dispositif de déclenchement 35 on démarre l'enregistrement d'images au moyen de l'ensemble des s dispositifs de prises de vues 20A, 20B, et 20C. les images sont enregistrées depuis le marqueur 60 sur une durée prédéfinie. Cela définit une première séquence EnrA. Au moyen d'un deuxième marqueur 62 on déclenche une deuxième séquence EnrB puis au moyen sur le troisième marqueur 64 on déclenche une troisième séquence EnrC. Ces séquences peuvent alors être traitées au moyen d'une fonction F21, F22, F 23 etc. choisie dans le circuit de mixage par appui sur un bouton du dispositif de déclenchement 35.

La figure 13 montre un exemple de mixage faisant appel à des fonctions de mixage F31 et F32 combinant des images provenant des dispositifs de prises de vues 20A, 20B et 20C.

Bien entendu, il est possible d'apporter à l'invention de nombreuses modifications sans pour cela sortir du cadre de l'invention.

Par exemple, les dispositifs de visualisation peuvent être de natures différentes telles que la vitesse de prises de vue, champ de prises de vue, nature du rayonnement (infra rouge) etc. L'invention couvre aussi le cas de l'utilisation d'un dispositif de télécommande pour commander l'exécution des différentes fonctions dudit système.

## Revendications

1. Système de traitement de séquences d'images concernant un processus se déroulant dans un espace d'évolution (1) et dont l'exécution peut être considérée sur un temps révolu, en cours ou à venir, système comportant au moins un dispositif de prises de vue (20) pour saisir des séquences, un dispositif de visualisation (25) pour restituer au moins certaines images desdites séquences, un organe de gestion (30) pour gérer différentes fonctions du système **caractérisé en ce qu'**il comporte, en outre, un circuit de mémoire (31) couplé audit dispositif de prises de vues pour mémoriser des images desdites séquences issues du dispositif de prises de vues, un dispositif de déclenchement (35) muni d'une commande d'activation pour fournir des signaux de marquage, par l'intermédiaire de l'organe de gestion (30), au dispositif de visualisation (25) en vue de restituer des images de séquences mémorisées dans le circuit de mémoire (31) pour une durée prédéterminée avant l'activation.

2. Système de traitement de séquences d'images concernant un processus selon la revendication 1, **caractérisé en ce que** le circuit de mémoire (31) est une mémoire tampon de type circulaire, de préférence.

3. Système de traitement de séquences d'images concernant un processus selon la revendication 1 ou 2, **caractérisé en ce qu'**il comporte une pluralité de dispositifs de prises de vues (20A, 20B, 20C,,,,) et d'un organe de sélection (F4, SEL) pour définir au moins un des dispositifs de visualisation en vue de l'activation.

4. Système de traitement de séquences d'images concernant un processus selon l'une des revendications 1 à 3, **caractérisé en ce que** le dispositif de déclenchement est constitué à partir d'un téléphone portable (smartphone) (35, 35b) présentant des boutons (F1, F2,..) pour définir et déclencher les signaux de marquages.

5. Système de traitement de séquences d'images concernant un processus selon l'une des revendications 1 à 3, **caractérisé en ce que** le dispositif de déclenchement est constitué à partir d'un dispositif sonore (sifflet ultrason) (35c).

6. Système de traitement de séquences d'images concernant un processus selon la revendication 3 à 5, **caractérisé en ce que** les séquences provenant d'au moins deux dispositifs de prises de vue soient vues en surimpression.

7. Système de traitement de séquences d'images concernant un processus selon l'une des revendications 1 à 6, **caractérisé en ce qu'**au moins un desdits dispositifs de visualisation (25) est formé à partir d'un écran tactile à partir duquel il est possible d'effectuer des commandes vers l'organe de gestion (30).

8. Système de traitement de séquences d'images concernant un processus selon la revendication 7 pour lequel les dispositifs de prises de vue (20A, 20B, 20C, ...) sont placés en des endroits différents, **caractérisé en ce qu'**il est prévu un moyen d'écriture (40) sur l'écran tactile d'un dispositif de visualisation comportant un tel écran tactile pour décrire une trajectoire, des moyens de correction pour adapter ladite trajectoire sur un dispositif de visualisation pour une prise de vue différente.

9. Système de traitement de séquences d'images concernant un processus selon la revendication 8 comportant au moins un deuxième dispositif de visualisation, **caractérisé en ce que** l'organe de gestion comporte une unité de calcul pour reporter sur un premier dispositif de visualisation un itinéraire tracé sur le deuxième.

10. Système de traitement de séquences d'images concernant un processus selon la revendication 7, **caractérisé en ce que** l'on définit un trajet préalablement pour certains aspects du processus et **en ce qu'**il est prévu un circuit de calcul pour déterminer l'écart entre le trajet défini préalablement sur l'écran et le trajet effectué lors du processus.

11. Système de traitement de séquences d'images concernant un processus selon l'une des revendications 2 à 10, **caractérisé en ce que** les dispositifs de visualisation sont de natures différentes telles que la vitesse de prises de vue, champ de prises de vue, nature du rayonnement (infra rouge) etc.

12. Système de traitement de séquences d'images concernant un processus selon l'une des revendications 1 à 11, **caractérisé en ce qu'**au moins un dispositif de visualisation sous la commande de l'organe de gestion visualise des séquences du processus pendant le déroulement de celui-ci.

13. Système de traitement de séquences d'images concernant un processus selon l'une des revendications 1 à 12, **caractérisé en ce qu'**il comporte un enregistreur de commentaires effectué pendant le déroulement de la séquence enregistrée.

14. Système de traitement de séquences d'images concernant un processus selon l'une des revendications 1 à 13, **caractérisé en ce que** l'organe de gestion permet de gérer différentes fonctions F1 à Fn telles que superposition de scènes reconnaissance de trajectoires, marquages vidéo multiple, dispositif de visualisation pour une diffusion avec latence, analyse trajectoire ou système en mode multiple.

15. Système de traitement de séquences d'images concernant un processus selon l'une des revendications 1 à 13, **caractérisé en ce qu'**il est prévu un dispositif de télécommande pour commander l'exécution des différentes fonctions dudit système.

16. Système de traitement de séquences d'images concernant un processus selon l'une des revendications 1 à 15, **caractérisé en ce qu'**au moins un dispositif de visualisation est placé au niveau de l'espace d'évolution (1).

17. Système de traitement de séquences d'images concernant un processus selon l'une des revendications 1 à 16, **caractérisé en ce qu'**au moins un dispositif de projection (80) est prévu pour fournir des images sur au moins une partie de l'espace d'évolution.

18. Système de traitement de séquences d'images concernant un processus selon l'une des revendications 1 à 17, **caractérisé en ce qu'**il est prévu une pluralité de dispositifs de déclenchement fournissant des signaux de marquage auxquels est associée une étiquette d'identification du dispositif de déclenchement.

19. Système de traitement de séquences d'images concernant un processus selon l'une des revendications 7 à 18, **caractérisé en ce qu'**au moins un dispositif de déclenchement est combiné avec un dispositif de visualisation de type tactile (101).
